# EUROPÄISCHE PATENTSCHRIFT

(11) **EP 2 931 587 B1**
(45) Veröffentlichungstag und Bekanntmachung des Hinweises auf die Patenterteilung: **04.10.2017**
(21) Anmeldenummer: 13805829.2
(22) Anmeldetag: 09.12.2013
(51) Int. Cl.: B62D 21/15

(54) **KRAFTFAHRZEUG MIT EINEM ACHSTRÄGER**
MOTOR VEHICLE HAVING AN AXLE SUPPORT
VÉHICULE AUTOMOBILE ÉQUIPÉ D'UN SUPPORT D'ESSIEU

(30) Priorität: 14.12.2012 DE 102012223292
(43) Veröffentlichungstag der Anmeldung: 21.10.2015
(73) Patentinhaber: Bayerische Motoren Werke Aktiengesellschaft, 80809 München (DE)
(72) Erfinder: HOISS, Franz, 82347 Bernried (DE)
(86) Internationale Anmeldenummer: PCT/EP2013/075953
(87) Internationale Veröffentlichungsnummer: WO 2014/090747

(56) Entgegenhaltungen:
- EP-A2- 1 036 689
- US-A- 5 884 963
- US-A1- 2012 049 571

## Beschreibung

Die Erfindung betrifft ein Kraftfahrzeug mit einem Achsträger nach dem Oberbegriff des Patentanspruchs 1.

Ein Achsträger, häufig auch als Fahrschemel oder Hilfsrahmen bezeichnet, ist ein Bauteil vieler Personenwagen mit selbsttragender Karosserie. Am Achsträger sind die aufbauseitigen Anlenkpunkte der Radaufhängungen befestigt, am vorderen Fahrschemel meist auch der Motor, das Getriebe, das Lenkgetriebe und bei Fahrzeugen mit angetriebenen Vorderrädern das Differential. Der Achsträger kann starr mit der Karosserie verschraubt (Integralträger) oder über Gummilager mit dem Aufbau verbunden sein. Bei modernen Kraftfahrzeugen hat der Achsträger häufig die Grundform eines innen offenen Rechtecks oder Trapezes.

Aus der EP 1 036 689 A2 ist ein Achsträger eines Personenkraftfahrzeugs bekannt, der in Fahrtrichtung gesehen geringfügig hinter einer Antriebseinheit angeordnet ist. An dem Achsträger sind an seinem in Fahrtrichtung vorne liegenden Bereich die untern Enden zweier Streben angebunden, die mit ihren oberen Endbereichen an Motorlängsträgern der Karosserie des Personenkraftfahrzeugs angebracht sind. Der in Fahrtrichtung hintere Bereich des Achsträgers ist über zwei sich nach hinten erstreckende Träger mit tragenden Karosseriebauteilen im vorderen, unteren Bereich der Fahrgastzelle der Karosserie verbunden. Die Anbindungen der Streben an die Motorlängsträger und an die Anbindungen der Träger an die tragenden Karosseriebauteile im vorderen, unteren Bereich der Fahrgastzelle können jeweils durch einen Sprengsatz schlagartig gelöst werden, wenn ein Frontalaufprall des Kraftfahrzeugs detektiert wird. Dadurch wird der Verschiebeweg der Antriebseinheit in Fahrtrichtung nach hinten frei. Der gesamte Raum zwischen der Fahrgastzelle und der Antriebseinheit kann für eine Verschiebung genutzt werden. Die sich bei einem Unfall verformenden Elemente, wie zum Beispiel die Motorlängsträger, können sich so ungehindert vom Achsträger verformen, wodurch eine hohe Aufprallenergie absorbiert werden kann.

Aufgabe der Erfindung ist es, das bekannte Kraftfahrzeug mit einem Achsträger weiterzubilden.

Diese Aufgabe wird mit einem Kraftfahrzeug mit einem Achsträger mit den Merkmalen des Patentanspruchs 1 gelöst.

Erfindungsgemäß weist ein Kraftfahrzeug einen Vorderwagen auf, der vor einer Fahrgastzelle angeordnet ist. In dem Vorderwagen ist eine Antriebseinheit, wie beispielsweise eine Brennkraftmaschine, angeordnet. Zwischen der Antriebseinheit und der Fahrgastzelle befindet sich ein Achsträger, an dem die aufbauseitigen Anlenkpunkte der Radaufhängungen der Vorderräder angebracht sind. Der hintere Bereich des Achsträgers ist über zumindest einen sich nach hinten erstreckenden Träger mit einem tragenden Karosseriebauteil im vorderen, unteren Bereich der Fahrgastzelle der Karosserie verbunden. Dazu ist der Träger mit dem tragenden Karosseriebauteil mit einem pyrotechnisch lösbaren Verbindungselement verbunden. Zusätzlich ist eine Führung zwischen dem hinteren Endbereich des Trägers und dem Karosseriebauteil angeordnet, die ausschließlich eine Verlagerung des geführten Endbereichs des Trägers in Fahrtrichtung gesehen nach hinten zulässt, wenn die Verbindung durch das pyrotechnische Verbindungselement zwischen dem Träger und dem Karosseriebauteil gelöst ist. Ein solches pyrotechnisch lösbares Verbindungselement kann beispielsweise eine pyrotechnische Trennschraube, ein pyrotechnischer Trennbolzen oder eine pyrotechnische Klinke sein. Alle pyrotechnischen Verbindungselemente haben im Sinne dieser Erfindung gemeinsam, dass sie eine pyrotechnische Sprengladung enthalten. Wenn diese pyrotechnische Sprengladung gezündet wird, wird das Verbindungselement so stark beschädigt oder gar zerstört, dass die Verbindung, die es zuvor hergestellt hat, gelöst wird. Bei der erfindungsgemäßen Verwendung kann das pyrotechnisch lösbare Verbindungselement eine formschlüssige Verbindung zwischen dem Träger und dem Karosseriebauteil bilden, solange es nicht ausgelöst wurde. Nach dem Auslösen ist das pyrotechnische Verbindungselement so weit zerstört, dass dieser Formschluss nicht mehr oder nur mehr in so geringerem Maße besteht, dass bereits geringe Kräfte ausreichen, um die Verbindung vollständig zu lösen.

Eine derartige pyrotechnische Trennschraube ist beispielsweise bereits aus der DE 195 32 746 A1 bekannt. Eine solche Trennschraube ermöglicht es, eine stabile Schraubverbindung zu gewährleisten, die schlagartig durch das Auslösen der pyrotechnischen Trennladung gelöst werden kann. Bevorzugt wird die pyrotechnische Trennschraube bei einer detektierten Kollision des Kraftfahrzeugs mit einem erheblichen frontalen Anteil ausgelöst, sodass sich diese Verbindung löst. Dazu kann die Trennschraube mit einem Airbagsteuergerät gekoppelt sein, sodass die Trennschraube beispielsweise zugleich mit einem Fahrer- oder Beifahrerairbag ausgelöst wird.

Günstigerweise ist das pyrotechnische Verbindungselement elektrisch auslösbar, wobei die elektrische Leitung zu dem pyrotechnisch auslösbaren Verbindungselement vom Innenraum der Fahrgastzelle aus zum pyrotechnischen Verbindungselement geführt ist. Durch die Hinführung der elektrischen Leitung über den Innenraum befindet sich die Leitung im Trockenraum und ist vor äußeren Beschädigungen geschützt.

Bevorzugt wird das pyrotechnisch lösbare Verbindungselement bei einer detektierten Kollision mit einem erheblichen frontalen Anteil ausgelöst, sodass sich die von dem pyrotechnischen Verbindungselement vor dem Auslösen gebildete Verbindung zwischen dem Träger und dem Karosseriebauteil gelöst wird.

Die erfindungsgemäße Anordnung ermöglicht eine robuste, einfach auszulegende Anbindung des Achsträgers an die Karosserie des Kraftfahrzeugs. Wenn ein Crash des Kraftfahrzeugs mit einer erheblichen frontalen Komponente detektiert wird, wird beispielsweise durch das Airbagsteuergerät das pyrotechnische Verbindungselement schlagartig aufgetrennt, mit der der zumindest eine Träger an dem Karosseriebauteil angebunden ist. Damit ist der Träger nur mehr über die Führung mit dem Karosseriebauteil verbunden. Wenn nun durch den Crash die Antriebseinheit nach hinten verlagert wird, stößt diese an dem Achsträger an, sodass in Fahrtrichtung sehr hohe Kräfte auf den Achsträger, und damit auch auf die Anbindung des zumindest einen Trägers an dem Karosseriebauteil wirken. Der Träger verschiebt sich dadurch nach hinten. Diese Verschiebung erfolgt kontrolliert und geführt durch die Führung. Somit kann der Achsträger durch die Führung definiert nach hinten ausweichen, sodass mehr Bauraum im Vorderwagen zur Verfügung steht, um Crashenergie durch eine gezielte Deformation aufzunehmen. Dennoch wird der Achsträger nicht vollständig vom Kraftfahrzeug gelöst, sodass dadurch keine zusätzliche Gefährdung entsteht.

Günstigerweise überlappen sich der hintere Endbereich des Trägers und das Karosseriebauteil in Fahrtrichtung, wobei der hintere Endbereich des Trägers an der Unterseite des Karosseriebauteils anliegt. Die Führung zwischen dem hinteren Endbereich des Trägers und dem Karosseriebauteil kann in einer besonders vorteilhaften Ausgestaltung gebildet werden von einem sich in Fahrtrichtung erstreckenden Langloch im Träger oder im Karosseriebauteil, wobei durch das Langloch am - in Fahrtrichtung gesehen - hinteren Ende ein Führungselement hindurch ragt, das mit dem Karosseriebauteil oder mit dem Träger verbunden ist. Dabei ist darauf zu achten, dass auch bei hohen einwirkenden Kräften das Führungselement stets durch das Langloch ragt, sodass die Führung gewährleistet ist. Die Länge des Langlochs begrenzt damit den maximalen Verlagerungsweg des hinteren Endbereichs des Trägers und damit des Achsträgers relativ zum Karosseriebauteil nach hinten. Beispielsweise kann das Führungselement von einer Schraube gebildet werden, die in das Karosseriebauteil oder in den Träger eingeschraubt ist, und so den Träger an das Karosseriebauteil anpresst. Dabei liegt der Kopf der Schraube an den an das Langloch angrenzenden seitlichen Bereichen an. Die bei einem Crash auf die Führung wirkenden Kräfte sind so hoch, dass die Haftkraft, mit der die Schraube den Träger an das Karosseriebauteil anpresst, überwunden wird. Nach dem Überwinden der Haftkraft entsteht durch die Schraube nur mehr eine Reibkraft zwischen dem Träger und dem Karosseriebauteil, die aber deutlich geringer ist als die Haftkraft. Zudem trägt die Reibkraft zur gewünschten Energieabsorption bei. Wenn diese Reibkraft nicht gewünscht sein sollte, damit sich der Achsträger bei einem Crash noch ungehinderter nach hinten verlagern kann, kann die Dicke des Bauteils mit dem Langloch im Bereich des Langlochs in Längsrichtung des Langlochs in Fahrtrichtung gesehen nach vorne abnehmen. Dadurch verliert die Schraube bereits nach einer geringen Verlagerung im Langloch ihre Spannkraft, sodass sie auch keine Reibkraft mehr erzeugen kann.

Bevorzugt ist der - in Fahrtrichtung gesehen - vordere Bereich des Achsträgers über Streben mit den oberhalb des Achsträgers verlaufenden Motorlängsträgern verbunden ist, die sich von einer Stirnwand der Fahrgastzelle - in Fahrtrichtung gesehen - nach vorne erstrecken und unter anderem zur Aufnahme eines vorderen Stoßfängers dienen. Diese Streben erhöhen die Steifigkeit der Anbindung des Achsträgers an die restliche Karosserie. Im Falle es Crashs stellen sie bei der Verlagerung des Achsträgers nach hinten keinen großen Widerstand dar. Sie verwinden sich primär im Bereich ihrer Anbindungspunkte an die Motorlängsträger und / oder an den Achsträger.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: eine Seitenansicht einer Karosserie eines Personenkraftfahrzeugs mit einem Achsträger,
- Fig. 2: eine schematische Skizze der erfindungsgemäßen Anbindung eines Achsträgers an eine Karosserie eines Kraftfahrzeugs,
- Fig. 3: eine Detaildarstellung der Anbindung des in Fig. 2 gezeigten Achsträgers an den vorderen unteren Bereich der Fahrgastzelle und
- Fig. 4: eine Diagramm, in dem das auf den Achsträger wirkende Lastniveau über einen Verlagerungsweg im Falle eines Crashs dargestellt ist.

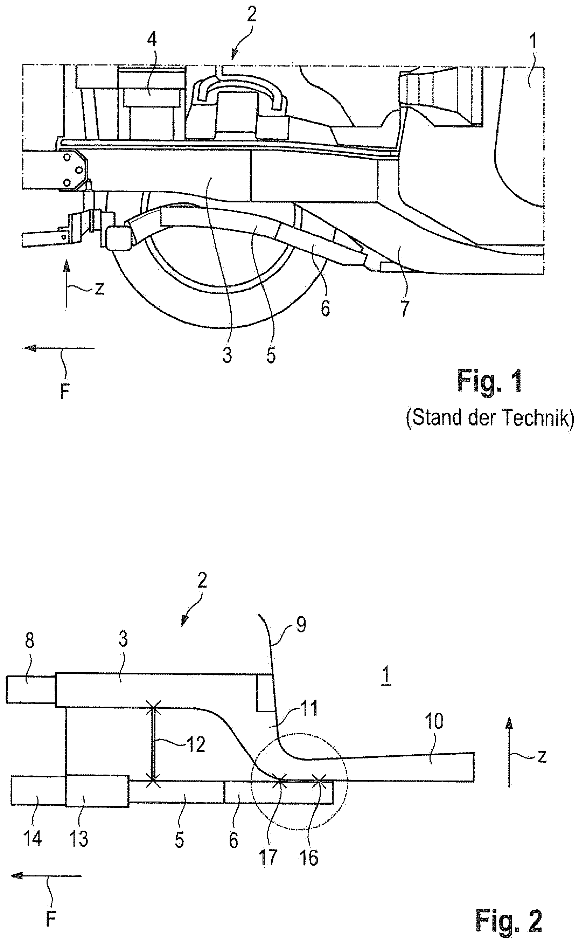

In Fig. 1 ist eine Seitenansicht eines aus dem Stand der Technik bekannten Personenkraftfahrzeugs gezeigt. Zu sehen sind der vordere Bereich einer Fahrgastzelle 1, an die in Fahrtrichtung F gesehen vorne ein Vorderwagen 2 angrenzt. In dem Vorderwagen 2 erstrecken sich zwei parallel zueinander verlaufende Motorlängsträger 3 von der Fahrgastzelle 1 aus nach vorne. Die beiden Motorlängsträger 3 dienen unter anderem zur Aufnahme einer Brennkraftmaschine 4 und eines vorderen Stoßfängers. Unterhalb der Motorlängsträger 3 in Fahrtrichtung F gesehen geringfügig hinter der Brennkraftmaschine 4 ist ein Achsträger 5 angeordnet. Der Achsträger 5 dient zur Aufnahme der Radaufhängungen der Vorderräder. Er hat die Grundform eines innen offenen Trapezes. Der Achsträger 5 ist im - in Fahrtrichtung F - gesehen vorderen Bereich beidseitig über jeweils eine Strebe an den Motorlängsträgern 3 angebunden. Im hinteren Bereich ist der Achsträger 5 beidseitig über jeweils einen Träger 6 mit einem tragenden Karosseriebauteil 7 im vorderen unteren Bereich der Fahrgastzelle verbunden. Damit ist der Achsträger 5 auf einfache und robuste Weise mit der Karosserie des Kraftfahrzeugs verbunden.

Im Vergleich zu der in Fig. 1 gezeigten Anordnung eines Achsträgers 5 aus dem Stand der Technik ist dazu in Fig. 2 eine erfindungsgemäße Anordnung eines Achsträgers anhand einer schematischen Prinzipskizze dargestellt. Dabei werden für einander entsprechende Bauteile gleiche Bezugszeichen wie in der Fig. 1 verwendet. Zu sehen ist in einer Seitenansicht des Kraftfahrzeugs ein Motorlängsträger 3, an dessen - In Fahrtrichtung F gesehen - vorderen Endabschnitt ein Stoßfänger-querträger 8 angebunden ist. Hinten endet der Motorlängsträger 3 an einer Stirnwand 9, die den Vorderwagen 2 von der Fahrgastzelle 1 dahinter abtrennt. Unten erstrecken sich in Fahrtrichtung F entlang der Fahrgastzelle 1 zwei zueinander parallel verlaufende Bodenlängsträger 10, die über einen von vorne oben schräg nach hinten unten verlaufenden Verbindungsträger 11 jeweils mit einem Motorlängsträger 3 verbunden sind. Geringfügig hinter einer im Vorderwagen 2 angeordneten Brennkraftmaschine und unterhalb der Motorlängsträger 3 ist der Achsträger 5 angeordnet. Der Achsträger 5 ist im - in Fahrtrichtung F - gesehen vorderen Bereich beidseitig über jeweils eine Strebe 12 an den Motorlängsträgern 3 angebunden. In der Verlängerung der beiden Seiten des Achsträgers 5 verlaufen zwei zueinander parallele Stützträger 13 in Fahrtrichtung F nach vorne. An den beiden vorderen Endbereichen dieser beiden Stützträger 13 ist ein Querträger 14 angebracht, der in Fahrzeugquerrichtung verläuft und einen unteren Lastpfad eines Stoßfängermoduls bildet. In Fahrtrichtung F nach hinten stützt sich der Achsträger 5 über zwei Träger 6 an den beiden Bodenlängsträgern 10 ab. Dabei verläuft jeweils ein Träger 6 vom hinteren Endbereich einer Seite des Achsträgers 5 zum Bodenlängsträger 10 auf derselben Seite.

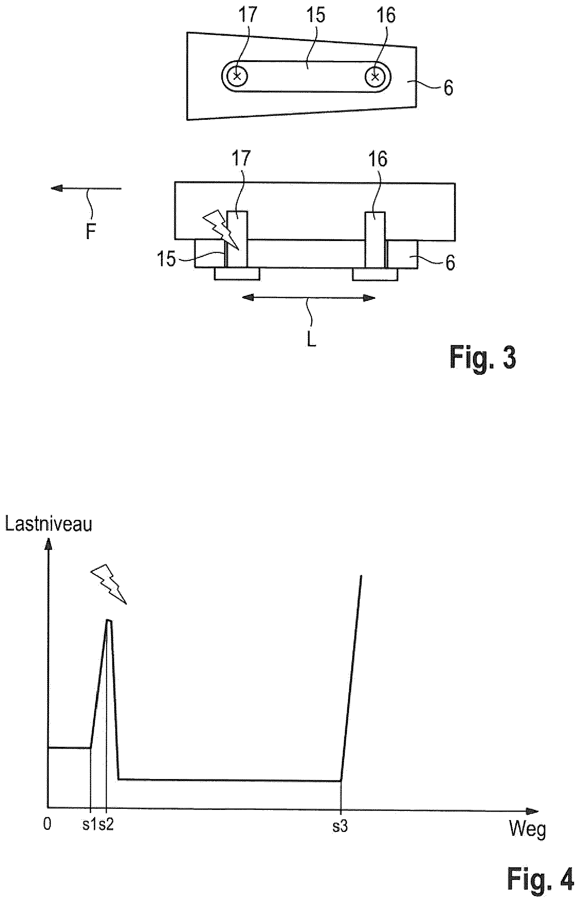

Beide Träger 6 sind dabei jeweils in Fahrzeughöhenrichtung z mit dem jeweiligen Bodenlängsträger 10 verschraubt. Diese Verschraubungen sind in Fig. 3 detaillierter dargestellt. Der Träger 6 weist dazu im Bereich der Verschraubung ein Langloch 15 auf, das sich in Fahrtrichtung F erstreckt. Durch den - in Fahrtrichtung F gesehen - hinteren Endabschnitt des Langlochs 15 ragt in Fahrzeughöhenrichtung z von unten eine konventionelle Schraube 16 durch das Langloch 15 hindurch, die in den Bodenlängsträger 10 fest eingeschraubt ist. Der Kopf der konventionellen Schraube 16 liegt dabei in Fahrzeughöhenrichtung z gesehen von unten am Träger 6 an und presst so diesen gegen den Bodenlängsträger 10. Durch den - in Fahrtrichtung F gesehen - vorderen Endabschnitt des Langlochs 15 ragt ebenfalls in Fahrzeughöhenrichtung z von unten eine pyrotechnische Trennschraube 17 durch das Langloch 15 hindurch, die in den Bodenlängsträger 10 fest eingeschraubt ist. Der Kopf der pyrotechnischen Trennschraube 17 liegt dabei in Fahrzeughöhenrichtung z gesehen von unten am Träger 6 an und presst so diesen gegen den Bodenlängsträger 10. Die konventionelle Schraube 16 und die pyrotechnische Trennschraube 17 gewährleisten so eine steife Anbindung des Trägers 6 an den Bodenlängsträger 10.

Die pyrotechnische Trennschraube 17 ist über ein elektrisches Kabel mit einem Airbagsteuergerät verbunden. Wenn eine Kollision des Kraftfahrzeugs mit einer erheblichen frontalen Komponente über Sensoren detektiert wird, löst das Airbag-steuergerät den Fahrer- und Beifahrerairbag. Gleichzeitig wird auch die pyrotechnische Trennschraube 17 ausgelöst. Diese beinhaltet in ihrem Schraubenschaft eine pyrotechnische Sprengladung, die beim Auslösen explodiert, sodass die Schraubverbindung der pyrotechnischen Trennschraube 17 sich löst. Dadurch wird der Träger 6 nur mehr durch die konventionelle Schraube 16 am Bodenlängsträger 10 gehalten. Wenn nun hohe Kräfte entgegen der Fahrtrichtung F auf den Achsträger 5 aufgrund der Deformation des Vorderwagens 2 beim Crash wirken, können die Kräfte, die vom Achsträger 5 über den Träger 6 auf die Verbindung zwischen dem Träger 6 und dem Bodenlängsträger 10 einwirken höher sein, als die Haftkraft zwischen dem Träger 6 und dem Bodenlängsträger 10 aufgrund der konventionellen Schraube 16. In diesem Fall wird sich der Träger 6 trotz der Verschraubung mit der konventionellen Schraube 16 nach hinten verschieben. Die konventionelle Schraube 16 wandert dabei aus ihrer hinteren Position in dem Langloch 15 nach vorne. Der maximale Weg, um den sich der Träger 6 dabei nach hinten verlagern kann, ist durch die Länge L des Langlochs 15 begrenzt, da dann die konventionelle Schraube 16 die vorderste Position im Langloch 15 erreicht hat und so ein formschlüssiges Hindernis darstellt.

Die Verbindung des Trägers 6 mit dem Bodenlängsträger 10 mit einer konventionellen Schraube 16 und einer pyrotechnischen Trennschraube 17 gewährleistet so eine Verlagerung des Achsträgers 5 nach hinten, sodass dieser bei einem Crash mit einer erheblichen frontalen Komponente nicht die Deformation des Vorderwagens 1 nennenswert behindert. Andererseits wird aber auch die Verbindung zwischen dem Träger 6 und dem Bodenlängsträger 10 nicht vollständig gelöst. Dadurch kann sich der Träger 6 und damit der Achsträger 5 nur auf kontrollierte und definierte Weise nach hinten verlagern, sodass hier kein neues Gefahrenpotential entsteht.

Zur Veranschaulichung der Funktionsweise ist in der Fig. 4 das auf die Verbindung zwischen Träger 6 und Bodenlängsträger 10 wirkende Lastniveau über den Verschiebeweg darstellt.

Zu Beginn der Verschiebung des Achsträgers 5 und damit des Trägers 6 gegenüber dem Bodenlängsträger 10 bei einem Crash entspricht das Lastniveau der Reibkraft zwischen dem Träger 6 und dem Bodenlängsträger 10 aufgrund der Vorspannung der konventionellen Schraube 16 und der pyrotechnischen Trennschraube 17. Bereits nach einem minimalen Weg s1 stößt aber die pyrotechnische Trennschraube 17 formschlüssig am vorderen Ende des Langlochs 15 an, sodass zunächst keine weitere Verschiebung möglich ist. Der minimale Verschiebeweg s1 entspricht dabei im Wesentlichen der Montagetoleranz beim Einschrauben der pyrotechnischen Trennschraube 17, die zwar im vorderen Endbereich des Langlochs 15 angeordnet ist, aber normalerweise nicht am vordersten Ende des Langlochs unmittelbar anliegt. Nach dem Verschiebeweg s1 steigt das Lastniveau sprunghaft an, da nur unter massiven Verformungen eine weitere Verschiebung möglich ist. In der Zwischenzeit wurde aber auch über die Sensoren des Kraftfahrzeugs die Kollision erkannt, und das Airbagsteuergerät löst die pyrotechnische Trennschraube 17 nach dem bisherigen Verschiebeweg s2 aus. Dadurch löst sich die pyrotechnische Trennschraube 17 und das Lastniveau sinkt schlagartig ab. Die Verbindung wird nun nur mehr durch die konventionelle Schraube 16 gehalten, die eine Reibkraft zwischen dem Träger 6 und dem Bodenlängsträger 10 erzeugt. Das Lastniveau aufgrund dieser Reibkraft ist aber niedriger, als das anfängliche Lastniveau aufgrund der Reibkraft, das die konventionelle Schraube 16 zusammen mit der pyrotechnischen Trennschraube 17 erzeugt hatte. Dieses niedrige Lastniveau bleibt über den weiteren Verschiebeweg nun in etwa konstant, bis nach einem Verschiebeweg s3 nun die konventionelle Schraube 16 am vorderen Ende des Langlochs 15 formschlüssig anliegt, sodass ab dem Verschiebeweg s3 nun das Lastniveau wieder sprunghaft ansteigt.

## Patentansprüche

1. Kraftfahrzeug mit einem Vorderwagen (2), der vor einer Fahrgastzelle (1) angeordnet ist, wobei in dem Vorderwagen (2) eine Antriebseinheit (4) angeordnet ist, und wobei ein Achsträger (5) zwischen der Antriebseinheit (4) und der Fahrgastzelle (1) angeordnet ist, an dem die aufbauseitigen Anlenkpunkte der Radaufhängungen der Vorderräder angebracht sind, wobei der hintere Bereich des Achsträgers (5) über zumindest einen sich nach hinten erstreckenden Träger (6) mit zumindest einem tragenden Karosseriebauteil (10) im vorderen, unteren Bereich der Fahrgastzelle (1) der Karosserie verbunden ist, wobei der Träger (6) mit dem tragenden Karosseriebauteil (10) mit einem pyrotechnisch lösbaren Verbindungselement verbunden ist, **dadurch gekennzeichnet, dass** zusätzlich eine Führung zwischen dem hinteren Endbereich des Trägers (6) und dem Karosseriebauteil (10) angeordnet ist, die ausschließlich eine Verlagerung des geführten Endbereichs in Fahrtrichtung nach hinten zulässt, wenn die Verbindung durch das pyrotechnische Verbindungselement zwischen dem Träger (6) und dem Karosseriebauteil (10) gelöst ist.

2. Kraftfahrzeug nach Anspruch 1, **dadurch gekennzeichnet, dass** sich der hintere Endbereich des Trägers (6) und das Karosseriebauteil (10) in Fahrtrichtung (F) überlappen, wobei der hintere Endbereich des Trägers (6) auf der Unterseite des Karosseriebauteils (10) anliegt.

3. Kraftfahrzeug nach Anspruch 1 oder 2, **dadurch gekennzeichnet, dass** das pyrotechnisch lösbare Verbindungselement gebildet wird von einer pyrotechnischen Trennschraube (17), einem pyrotechnischen Trennbolzen oder einer pyrotechnischen Klinke.

4. Kraftfahrzeug nach einem der Ansprüche 1 bis 3, **dadurch gekennzeichnet, dass** das pyrotechnisch lösbare Verbindungselement eine formschlüssige Verbindung zwischen dem Träger (6) und dem Karosseriebauteil (10) bildet, solange es nicht ausgelöst wurde.

5. Kraftfahrzeug nach einem der vorhergehenden Ansprüche, **dadurch gekennzeichnet, dass** das pyrotechnisch lösbare Verbindungselement bei einer detektierten Kollision mit einem erheblichen frontalen Anteil ausgelöst wird, sodass sich die von dem pyrotechnischen Verbindungselement vor dem Auslösen gebildete Verbindung zwischen dem Träger (6) und dem Karosseriebauteil (10) gelöst wird.

6. Kraftfahrzeug nach einem der vorhergehenden Ansprüche, **dadurch gekennzeichnet, dass** das pyrotechnische Verbindungselement elektrisch auslösbar ist, wobei die elektrische Leitung zu dem pyrotechnisch auslösbaren Verbindungselement vom Innenraum der Fahrgastzelle (1) aus zum pyrotechnischen Verbindungselement geführt ist.

7. Kraftfahrzeug nach einem der vorhergehenden Ansprüche, **dadurch gekennzeichnet, dass** die Führung zwischen dem hinteren Endbereich des Trägers (6) und dem Karosseriebauteil (10) gebildet wird von einem sich in Fahrtrichtung (F) erstreckenden Langloch (15) im Träger (6) oder im Karosseriebauteil (10), wobei durch das Langloch (15) am - in Fahrtrichtung (F) gesehen - hinteren Ende ein Führungselement hindurch ragt, das mit dem Karosseriebauteil (10) oder mit dem Träger (6) verbunden ist.

8. Kraftfahrzeug nach Anspruch 7, **dadurch gekennzeichnet, dass** das Führungselement von einer Schraube (16) gebildet wird, die in das Karosseriebauteil (10) oder in den Träger (6) eingeschraubt ist, und so den Träger (6) an das Karosseriebauteil (10) anpresst.

9. Kraftfahrzeug nach Anspruch 7 oder 8, **dadurch gekennzeichnet, dass** die Dicke des Bauteils (6, 10) mit dem Langloch (15) im Bereich des Langlochs (15) in Längsrichtung des Langlochs (15) in Fahrtrichtung F gesehen nach vorne abnimmt.

10. Kraftfahrzeug nach einem der vorhergehenden Ansprüche, **dadurch gekennzeichnet, dass** der - in Fahrtrichtung (F) gesehen - vordere Bereich des Achsträgers (5) über Streben (12) mit den oberhalb des Achsträgers (5) verlaufenden Motorlängsträgern (3) verbunden ist, die sich von einer Stirnwand (9) der Fahrgastzelle (1) - in Fahrtrichtung (F) gesehen - nach vorne erstrecken und unter anderem zur Aufnahme eines vorderen Stoßfängers dienen.

## Claims

1. A motor vehicle with a front end (2) which is arranged in front of a passenger cell (1), wherein a drive unit (4) is arranged in the front end (2), and wherein an axle support (5) is arranged between the drive unit (4) and the passenger cell (1), to which axle support the structure-side linkage points of the wheel suspensions of the front wheels are attached, wherein the rear region of the axle support (5) is connected via at least one support (6) which extends rearwards to at least one supporting body component (10) in the front, lower region of the passenger cell (1) of the body, wherein the support (6) is connected to the supporting body component (10) by a pyrotechnically releasable connecting element, **characterised in that** additionally a guide is arranged between the rear end region of the support (6) and the body component (10), which guide permits exclusively displacement of the guided end region towards the rear in the direction of travel if the connection by the pyrotechnic connecting element between the support (6) and the body component (10) is released.

2. A motor vehicle according to Claim 1, **characterised in that** the rear end region of the support (6) and the body component (10) overlap each other in the direction of travel (F), the rear end region of the support (6) lying against the underside of the body component (10).

3. A motor vehicle according to Claim 1 or Claim 2, **characterised in that** the pyrotechnically releasable connecting element is formed by a pyrotechnic severing screw (17), a pyrotechnic severing bolt or a pyrotechnic catch.

4. A motor vehicle according to one of Claims 1 to 3, **characterised in that** the pyrotechnically releasable connecting element forms a positively-locking connection between the support (6) and the body component (10) as long as it has not been triggered.

5. A motor vehicle according to one of the preceding claims, **characterised in that** the pyrotechnically releasable connecting element in the event of a detected collision having a considerable frontal component is triggered so that the connection between the support (6) and the body component (10) formed by the pyrotechnic connecting element before the triggering is released.

6. A motor vehicle according to one of the preceding claims, **characterised in that** the pyrotechnic connecting element can be triggered electrically, the electric line to the pyrotechnically triggerable connecting element being guided to the pyrotechnic connecting element from the interior of the passenger cell (1).

7. A motor vehicle according to one of the preceding claims, **characterised in that** the guide between the rear end region of the support (6) and the body component (10) is formed by a elongate hole (15) extending in the direction of travel (F) in the support (6) or in the body component (10), with a guide element projecting through the elongate hole (15) on the rear end - viewed in the direction of travel (F) - which is connected to the body component (10) or to the support (6).

8. A motor vehicle according to Claim 7, **characterised in that** the guide element is formed by a screw (16) which is screwed into the body component (10) or into the support (6), and thus presses the support (6) against the body component (10).

9. A motor vehicle according to Claim 7 or Claim 8, **characterised in that** the thickness of the component (6, 10) having the elongate hole (15) in the region of the elongate hole (15) decreases in the longitudinal direction of the elongate hole (15) towards the front, viewed in the direction of travel F.

10. A motor vehicle according to one of the preceding claims, **characterised in that** the front region - viewed in the direction of travel (F) - of the axle support (5) is connected via struts (12) to the engine side members (3) which run above the axle support (5), which extend towards the front from an end wall (9) of the passenger cell (1) - viewed in the direction of travel (F) - and serve among other things for receiving a front bumper.

## Revendications

1. Véhicule automobile équipé d'un compartiment avant (2) situé à l'avant de l'habitacle (1) et dans lequel est montée une unité d'entraînement (4), étant monté entre l'unité d'entraînement (4) et l'habitacle (1), étant monté un support d'essieu (5) sur lequel les points d'articulation situés côté carrosserie des suspensions des roues avant sont montés, la zone arrière du support d'essieu (5) étant reliée, par l'intermédiaire d'au moins un support (6) s'étendant vers l'arrière à au moins un composant porteur (10) de la carrosserie, dans la zone inférieure avant de l'habitacle (1) de la carrosserie, le support (6) étant relié au composant porteur (10) de la carrosserie par un élément de liaison détachable par pyrotechnique,
**caractérisé en ce qu'**
est en outre monté, entre la zone d'extrémité arrière du support (6) et le composant (10) de la carrosserie un guidage qui permet exclusivement un déplacement de la zone d'extrémité guidée vers l'arrière dans la direction de déplacement, lorsque la liaison par l'élément de liaison par pyrotechnique du support (6) et du composant (10) de la carrosserie est supprimée.

2. Véhicule conforme à la revendication 1,
**caractérisé en ce que**
la zone d'extrémité arrière du support (6) et le composant (10) de la carrosserie se chevauchent dans la direction de déplacement (F), la zone d'extrémité arrière du support (6) s'appliquant sur la face inférieure du composant (10) de la carrosserie.

3. Véhicule conforme à la revendication 1 ou 2,
**caractérisé en ce que**
l'élément de liaison détachable par pyrotechnique est formé par une vis de séparation pyrotechnique (17), un boulon de séparation pyrotechnique ou un cliquet pyrotechnique.

4. Véhicule conforme à l'une des revendications 1 à 3,
**caractérisé en ce que**
l'élément de liaison détachable par pyrotechnique forme une liaison par la forme entre le support (6) et le composant (10) de la carrosserie tant qu'il n'a pas été détaché.

5. Véhicule conforme à l'une des revendications précédentes,
**caractérisé en ce que**
l'élément de liaison détachable par pyrotechnique est déclenché lors de la détection d'une collision avec une partie frontale important de sorte que la liaison entre le support (6) et le composant (10) de la carrosserie soit formée par l'élément de liaison par pyrotechnique avant que le déclenchement soit détaché.

6. Véhicule conforme à l'une des revendications précédentes,
**caractérisé en ce que**
l'élément de liaison par pyrotechnique peut être déclenché électriquement, la ligne électrique vers l'élément de liaison pouvant être déclenché par pyrotechnique allant de la partie interne de l'habitacle (1) à l'élément de liaison par pyrotechnique.

7. Véhicule conforme à l'une des revendications précédentes,
**caractérisé en ce que**
le guidage entre la zone d'extrémité arrière du support (6) et le composant (10) de la carrosserie est formé par un trou oblong (15) s'étendant dans la direction de déplacement (F) situé dans le support (6) ou dans le composant (10) de la carrosserie, au travers du perçage oblong (15), à son extrémité arrière considérée dans la direction (F) de déplacement pénétrant un élément de guidage qui est relié au composant (10) de la carrosserie ou au support (6).

8. Véhicule conforme à la revendication 7,
**caractérisé en ce que**
l'élément de guidage est formé par une vis (16) qui est vissée dans le composant (10) de la carrosserie ou dans le support (6) et qui comprime ainsi le support (6) contre le composant (10) de la carrosserie.

9. Véhicule conforme à la revendication 7 ou 8,
**caractérisé en ce que**
l'épaisseur du composant (6, 10) équipé du perçage oblong (15) diminue vers l'avant considéré dans la direction de déplacement (F) dans la zone du perçage oblong (15) dans la direction longitudinale de ce perçage oblong (15).

10. Véhicule conforme à l'une des revendications précédentes,
**caractérisé en ce que**
la zone avant du support d'essieu (5) considérée dans la direction de déplacement (F) est reliée par l'intermédiaire d'entretoises (12) aux longerons (3) du moteur s'étendant au-dessus du support d'essieu (5) qui s'étendent vers l'avant considéré dans la direction de déplacement (F) à partir d'une paroi frontale (9) de l'habitacle (1), et servent entre autre au montage d'un pare-choc avant.
